# EUROPÄISCHE PATENTANMELDUNG

(11) **EP 2 112 037 A1**
(43) Veröffentlichungstag der Anmeldung: **28.10.2009**
(21) Anmeldenummer: 08008056.7
(22) Anmeldetag: 25.04.2008
(51) Int. Cl.: B60R 25/04

(54) **Sicherheitsmodul**

(71) Anmelder: Delphi Technologies, Inc., Troy, Michigan 48007 (US)
(72) Erfinder: Theil, Andreas, 51491 Overath (DE); Stiewe, Thomas, 58540 Meinerzhagen (DE); Richter, Frank, 51469 Bergisch Gladbach (DE); Giesen, Marko, 51588 Nümbrecht (DE)
(74) Vertreter: Manitz, Finsterwald & Partner GbR

(57) **Zusammenfassung**

Es wird ein Sicherheitsmodul für ein Kraftfahrzeug mit einer Antriebsvorrichtung und wenigstens einem Fahrzeug-Steuergerät (11) zum Steuern des Betriebs der Antriebsvorrichtung zur Verfügung gestellt. Das Sicherheitsmodul umfasst ein Antennenmodul (13), ein Übertragungsmodul (17) und eine Sicherheitsmodul-Steuereinheit. Das Übertragungsmodul (17) ist mit einem integrierten Schaltkreis (21) ausgestattet, welcher einen Oszillatorschaltkreis zum Bereitstellen eines elektrischen Schwingungssignals, einen Anregungs-/Leseschaltkreis zum Erzeugen eines zu sendenden Ausgangssignal und zum Auslesen von Daten aus dem empfangenen Eingangssignal, einen Spannungsreglerschaltkreis zum Bereitstellen einer konstanten elektrischen Spannung und einen Schnittstellenschaltkreis zum Ermöglichen einer digitalen Datenübertragung umfasst.

## Beschreibung

Die vorliegende Erfindung betrifft ein Sicherheitsmodul für ein Kraftfahrzeug mit einer Antriebsvorrichtung und wenigstens einem Fahrzeug-Steuergerät zum Steuern des Betriebs der Antriebsvorrichtung. Das Sicherheitsmodul umfasst ein Antennenmodul, ein Übertragungsmodul und eine Sicherheitsmodul-Steuereinheit. Das Antennenmodul ist ausgebildet, um elektromagnetische Signale zu einer tragbaren elektronischen Freigabevorrichtung zu senden und von dieser zu empfangen. Das Übertragungsmodul steht mit dem Antennenmodul in Verbindung und ist ausgebildet, um von diesem ein Eingangssignal zu empfangen und auf der Grundlage des Eingangssignals einen Sicherheitscode zu erzeugen. Die Sicherheitsmodul-Steuereinheit steht mit dem Übertragungsmodul und dem Fahrzeug-Steuergerät in Verbindung und ist ausgebildet, um den Sicherheitscode von dem Übertragungsmodul zu empfangen, diesen zu validieren und in Abhängigkeit von dem Ergebnis der Validierung das Fahrzeug-Steuergerät selektiv anzuweisen, den Betrieb der Antriebsvorrichtung zu blockieren oder freizugeben.

Derartige Sicherheitsmodule werden beispielsweise als elektronische Wegfahrsperren eingesetzt, um die Benutzung eines Kraftfahrzeugs durch Unbefugte zu verhindern. Bei der tragbaren elektronischen Freigabevorrichtung kann es sich um einen elektronisch codierten Zündschlüssel, einen separaten Handsender oder eine Chipkarte handeln. Insbesondere kommt bei gängigen Systemen ein passiver Signalbeantwortungsbaustein, ein sogenannter Transponder, zum Einsatz, welcher in einem Zündschlüssel oder in einem Schlüsselanhänger des Zündschlüssels integriert ist. Üblicherweise ist das Antennenmodul im Bereich des Zündschlosses angeordnet, um durch die räumliche Nähe zwischen Antennenmodul und Transponder eine optimale Signalübertragung zu ermöglichen. Das Antennenmodul ist über ein Kabel mit einer Steuereinheit der Wegfahrsperre verbunden, wobei die Steuereinheit den Betrieb des Antennenmoduls steuert und das von diesem empfangene Signal dekodiert. Die Steuereinheit der Wegfahrsperre kommuniziert über ein weiteres Kabel mit einem oder mehreren Steuergeräten des Kraftfahrzeugs, welche den Fahrzeugbetrieb sperren, falls kein gültiges Antwortsignal von dem Transponder empfangen wird.

Während die Datenübertragung zwischen der Steuereinheit der Wegfahrsperre und dem Fahrzeug-Steuergerät üblicherweise auf digitaler Basis erfolgt und die entsprechende Verbindungsleitung im Wesentlichen beliebig lang sein kann, ist das analoge Signalübertragungskabel zwischen dem Antennenmodul und der Steuereinheit der Wegfahrsperre anfällig für verschiedene während des Kraftfahrzeugbetriebs auftretende Störstrahlungen und unterliegt daher einer Längenbeschränkung, üblicherweise etwa 0,9 Meter. Diese Einschränkung muss bei der Entwicklung und Konstruktion eines Kraftfahrzeugs berücksichtigt werden und führt zu unerwünschten Nebenbedingungen in Bezug auf die Elektronik-Architektur.

Das Problem der beschränkten Kabellänge kann dadurch umgangen werden, dass nicht nur eine Antenne, sondern ein komplettes Übertragungsmodul im Bereich des Zündschlosses angebracht wird, welches die von der Antenne empfangenen Daten unmittelbar in digitale Daten umsetzt. Dazu müssen jedoch mehrere verschiedenartige Komponenten in dem Übertragungsmodul vorgesehen sein, wie z.B. ein Mikrocontroller, ein Oszillator, ein Spannungsregler, ein Schnittstellenbaustein und ein Anregungs-/Lesebaustein, wodurch die Herstellungskosten erhöht werden. Außerdem können sich bei dieser Variante Probleme in Bezug auf den Platzbedarf ergeben, da die genannten Bauelemente einschließlich eines entsprechenden Gehäuses nahe am Zündschloss untergebracht werden müssen.

Fahrzeughersteller und -zulieferer wünschen sich daher ein Sicherheitsmodul, das eine erhöhte Flexibilität bezüglich des Einbaus bei gleichzeitig minimierten Kosten aufweist.

Diese Aufgabe wird durch ein Sicherheitsmodul mit den Merkmalen des Anspruchs 1 gelöst. Erfindungsgemäß weist das Übertragungsmodul einen integrierten Schaltkreis auf, welcher einen Oszillatorschaltkreis zum Bereitstellen eines elektrischen Schwingungssignals, einen Anregungs-/Leseschaltkreis zum Erzeugen eines zu sendenden Ausgangssignals und zum Auslesen von Daten aus dem empfangenen Eingangssignal, einen Spannungsreglerschaltkreis zum Bereitstellen einer konstanten elektrischen Spannung und einen Schnittstellenschaltkreis zum Ermöglichen einer digitalen Datenübertragung umfasst.

Erfindungsgemäß ist also das Übertragungsmodul als Zwischenstation zwischen Antennenmodul und Sicherheitsmodul-Steuereinheit konfiguriert, wobei alle wesentlichen Komponenten zum Betrieb des Antennenmoduls und zum Auslesen der Daten aus dem Antennensignal in einem einzelnen Schaltkreis integriert sind. Durch einen derartigen einheitlichen Schaltkreis wird die Notwendigkeit vermieden, separate Einzelbauteile zur Spannungsversorgung, zur Signalwandlung und zur Datenübertragung anzuschaffen, aufeinander abzustimmen und miteinander zu verschalten. Außerdem wird eine effizientere Fertigung ermöglicht und die Zuverlässigkeit des Systems wird erhöht. Zusätzlich werden auch die Beschränkungen hinsichtlich des Einbauraums deutlich verringert, da ein einzelner integrierter Schaltkreis wesentlich weniger Platz beansprucht als ein aus separaten Bausteinen zusammengesetztes Modul. Das im Wesentlichen auf ein einzelnes Bauelement reduzierte Übertragungsmodul kann auf vielfältige Weise im Bereich des Zündschlosses, der Lenksäule oder an anderer Stelle im vorderen Fahrzeugbereich angeordnet werden.

Mögliche Weiterbildungen der Erfindung sind in den abhängigen Ansprüchen, der Zeichnung sowie der Beschreibung angegeben.

Vorzugsweise sind der Oszillatorschaltkreis, der Anregungs-/Leseschaltkreis, der Spannungsreglerschaltkreis und der Schnittstellenschaltkreis auf einem einstückigen Trägerelement, insbesondere einem Mikrochip, zusammengefasst. Dabei kann es sich um ein monolithisches Halbleitersubstrat oder eine erweiterte elektrische Leiterplatte handeln. Somit kann eine maximale Miniaturisierung des Übertragungsmoduls erreicht werden, da lediglich ein einzelnes platzsparendes Schaltungsbauteil und je nach Anwendung einige passive Zusatzkomponenten erforderlich sind, um ein komplettes Übertragungssystem für eine elektronische Wegfahrsperre bereitzustellen. Durch die Zusammenfassung der Einzelschaltkreise reduziert sich ferner die Fehleranfälligkeit, da nur ein einzelnes, zuvor getestetes Bauteil zum Einsatz kommt. Außerdem kann auf diese Weise die erforderliche Fläche des Halbleitersubstrats minimiert werden, was unter Kostengesichtspunkten vorteilhaft ist.

Gemäß einer bevorzugten Ausführungsform ermöglicht der Schnittstellenschaltkreis eine Datenübertragung auf der Grundlage eines seriellen Ein-Draht-Bussystems. Ein derartiges Bussystem zeichnet sich durch besonders robuste Übertragungseigenschaften sowie geringe Anforderungen in Bezug auf das zu verwendende Verbindungskabel aus. Insbesondere kann die standardisierte K-Leitung verwendet werden, welche auf einem auf die Fahrzeugbatteriespannung bezogenen Pegelsystem beruht. Die K-Leitung ist protokollunabhängig und gewährt daher eine große Flexibilität.

Bevorzugt steht das Übertragungsmodul über ein Antennenkabel von mindestens 0,3 m Länge mit dem Antennenmodul in Verbindung. Es ist also nicht notwendig, das Übertragungsmodul direkt neben dem Antennenmodul, also in oder am Zündschloss, anzuordnen. Falls in diesem Bereich ein Einbau aus Platzgründen problematisch ist, kann vielmehr die maximal mögliche Kabellänge für die Antennenleitung von 0,9 m in vollem Umfang ausgenutzt werden, um das Übertragungsmodul an einer geeigneteren Stelle unterzubringen.

Gemäß einer weiteren bevorzugten Ausführungsform der Erfindung steht das Übertragungsmodul über ein Schnittstellenkabel von mehr als 1 m Länge mit der Sicherheitsmodul-Steuereinheit in Verbindung. Damit werden die Vorteile der seriellen Übertragung von digitalen Daten zwischen dem Übertragungsmodul und der Steuereinheit in besonderer Weise ausgenutzt. Die Steuereinheit muss also nicht in der Nähe des Übertragungsmoduls angeordnet sein, sondern sie kann im Wesentlichen an beliebiger Stelle im Kraftfahrzeug untergebracht werden.

Vorzugsweise umfasst der Anregungs-/Leseschaltkreis eine Anwendungsspezifische Integrierte Schaltung. Die Architektur des Schaltkreises ist also genau auf die jeweilige Aufgabenstellung des Sicherheitsmoduls zugeschnitten, weshalb ein besonders schneller, effizienter und zuverlässiger Betrieb möglich ist.

Gemäß einer bevorzugten Ausführungsform stellt der Oszillatorschaltkreis ein elektrisches Schwingungssignal mit einer Frequenz von etwa 125 kHz bereit. Diese Frequenz ist auf die Signalübertragungseigenschaften zwischen Antennenmodul und in den Zündschlüssel integriertem Transponder angepasst.

Vorzugsweise kommuniziert die Sicherheitsmodul-Steuereinheit über ein standardisiertes serielles Bussystem, insbesondere ein CAN-Bussystem, mit dem Fahrzeug-Steuergerät. Die Sicherheitsmodul-Steuereinheit ist somit an beliebiger Stelle innerhalb des fahrzeugeigenen Bussystems mit dem Motorsteuergerät und/oder weiteren Steuergeräten des Kraftfahrzeugs verbindbar, wodurch die Flexibilität der Gesamtanordnung weiter erhöht wird.

Die Erfindung betrifft ferner einen integrierten Schaltkreis, der zur Verwendung in einem erfindungsgemäßen Sicherheitsmodul ausgebildet ist.

Im Folgenden wird die Erfindung beispielhaft unter Bezugnahme auf die Zeichnungen beschrieben. Es zeigen:
- Fig. 1: ein schematisches Blockschaltbild eines Sicherheitsmoduls gemäß dem Stand der Technik, das ein in die Sicherheitsmodul-Steuereinheit integriertes Übertragungsmodul aufweist;
- Fig. 2: ein schematisches Blockschaltbild eines alternativen Sicherheitsmoduls gemäß dem Stand der Technik, das eine Kombination aus einem Antennenmodul und einem Übertragungsmodul aufweist; und
- Fig. 3: ein schematisches Blockschaltbild eines erfindungsgemäßen Sicherheitsmoduls.

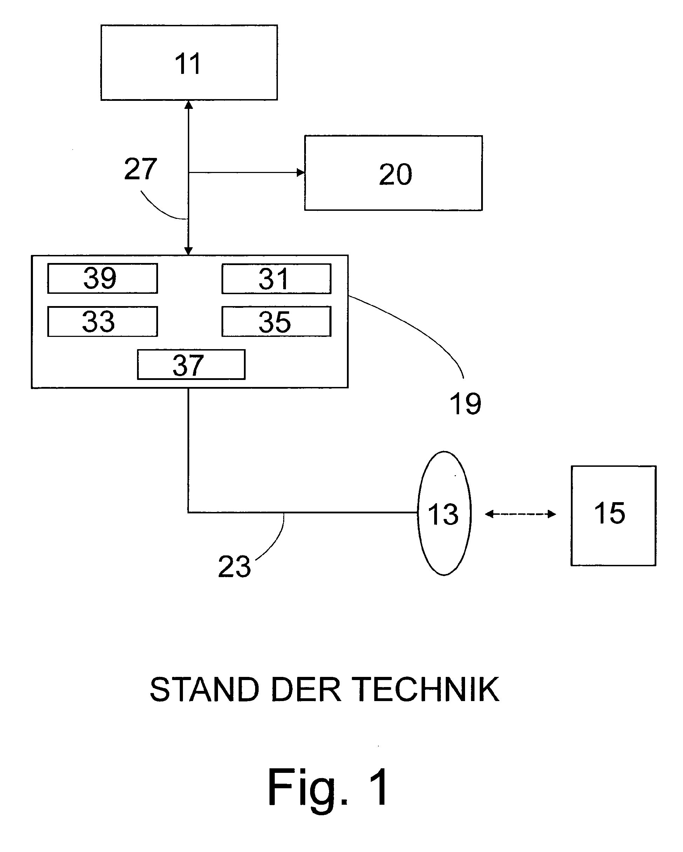

Die in den Fig. 1 bis 3 dargestellten Sicherheitsmodule sind als elektronische Wegfahrsperren für Kraftfahrzeuge ausgebildet und beruhen auf einem selektiven Freigeben oder Blockieren des Betriebs der Antriebsvorrichtung bei einem Aktivieren der Zündanlage. Die Antriebsvorrichtung ist hier ein Verbrennungsmotor (nicht dargestellt). Alternativ kann es sich auch um einen Elektromotor oder um eine Kombination aus einem Verbrennungsmotor und einem oder mehreren Elektromotoren handeln, welche durch einen Hybridantriebsstrang gekoppelt sind. Beim Einschalten der Zündung wird der in dem Zündschlüssel integrierte Transponder 15 aktiviert, indem er von dem als Lesespule ausgebildeten Antennenmodul 13 gemäß dem Transformatorprinzip mit elektrischer Energie versorgt wird. Der Transponder 15 antwortet auf das Aktivierungssignal hin, indem er ein Antwortsignal an die Lesespule 13 sendet, welches einen ihm zugeordneten Sicherheitscode beinhaltet. Die Datenübertragung erfolgt hier mittels modulierten elektromagnetischen Wellen mit einer Trägerfrequenz von 125 kHz. Die Lesespule 13 empfängt das von dem Transponder 15 gesendete Signal und leitet es an eine Basisstation 19 der Wegfahrsperre weiter. Die Basisstation 19 kann als eigenständiges Steuergerät ausgebildet sein oder in andere bestehende Elektronik-Komponenten integriert sein, wie z.B. in ein Komfortsteuergerät oder eine Armaturentafel-Elektronik. Sie kann auch auf Software-Ebene implementiert sein. Der Sicherheitscode wird in der Basisstation 19 validiert, also auf seine Gültigkeit hin überprüft. Sofern der Sicherheitscode gültig ist, weist die Basisstation 19 das dem Verbrennungsmotor zugeordnete Steuergerät 11 an, den Betrieb des Motors freizugeben. Falls die Basisstation 19 keinen gültigen Sicherheitscode erkennt, weist sie das Steuergerät 11 an, den Betrieb des Motors zu blockieren. Ein Starten des Kraftfahrzeugs wird durch die Basisstation 19 der Wegfahrsperre so lange verhindert, bis ein Transponder 15 mit gültigem Sicherheitscode an die Lesespule 13 herangeführt wird. Zur Erhöhung der Sicherheit kann die Basisstation 19 zusätzlich auch weitere Fahrzeugsteuereinheiten 20 anweisen, einen Motorstart zu verhindern. Beispielsweise kann eine elektrische Kraftstoffpumpe oder ein Anlassermotor blockiert werden. Zusätzlich kann die Basisstation 19 auch noch weitere Arbeitsschritte durchführen, wie zum Beispiel eine Ver- bzw. Entschlüsselung der übertragenen Daten oder das Abfragen von zusätzlichen Sicherheitscodes von anderen Fahrzeugkomponenten.

Zur Energieversorgung des Transponders 15 und zur Übertragung der Daten von der Lesespule 13 zu der Basisstation 19 sind verschiedene Komponenten erforderlich, nämlich insbesondere ein interner Oszillator 31, ein Spannungsregler 33, ein Schnittstellenbaustein 35, ein Anregungs-/Lesebaustein 37 zum Steuern der Anregung des Transponders und zum Auslesen des von ihm empfangenen Antwortsignals sowie ein Mikrocontroller 39 zum Umsetzen und Aufbereiten der Daten. Bei der in Fig. 1 dargestellten Wegfahrsperre gemäß dem Stand der Technik sind diese Bauelemente in der Basisstation 19 der Wegfahrsperre untergebracht. Die Wegfahrsperre besteht in diesem Fall also im Wesentlichen aus der im Zündschloss angeordneten Lesespule 13 sowie einer maximal 0,9 m entfernten Basisstation 19, welche Steuerungs- und Übertragungskomponenten beinhaltet.

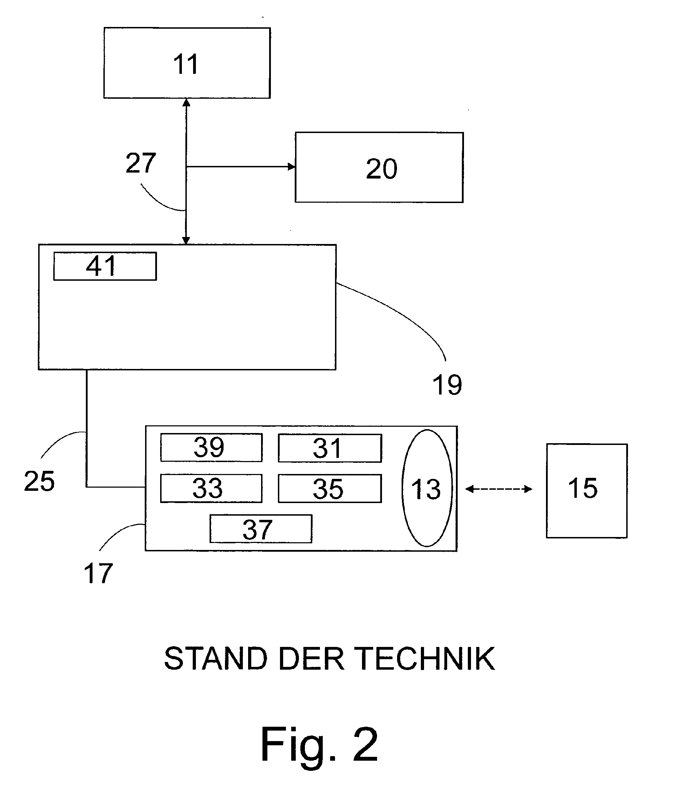

Demgegenüber ist bei der in Fig. 2 dargestellten alternativen Wegfahrsperre gemäß dem Stand der Technik zusätzlich zur Basisstation 19 ein separates Übertragungsmodul 17 vorgesehen, in welches die Lesespule 13 integriert ist. Das Übertragungsmodul 17 definiert eine mit der Basisstation 19 gemeinsame digitale Schnittstelle, weshalb die Länge des Verbindungskabels zwischen Übertragungsmodul 17 und Basisstation 19 keiner besonderen Beschränkung unterliegt. Die Basisstation 19 benötigt in diesem Fall einen separaten Mikrocontroller 41.

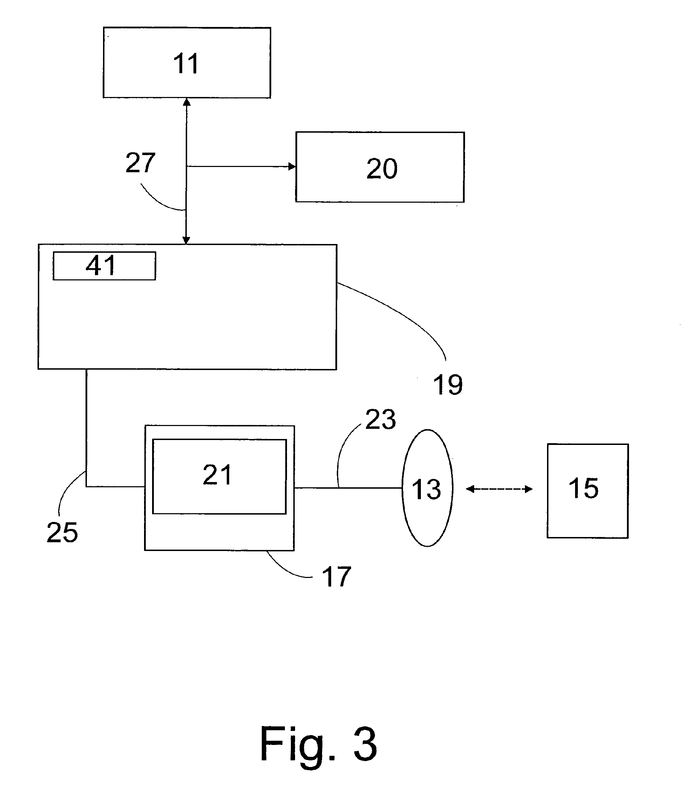

Wie in Fig. 3 zu erkennen ist, ist das Übertragungsmodul 17 bei der erfindungsgemäßen Wegfahrsperre als separate, sowohl von der Basisstation 19 als auch von der Lesespule 13 getrennte Einheit ausgebildet und über zwei separate Kabel 23, 25 an diese angeschlossen. In dem Übertragungsmodul 17 befindet sich ein integrierter Schaltkreis 21, der einen Oszillatorschaltkreis, einen Anregungs-/Leseschaltkreis, einen Spannungsreglerschaltkreis sowie einen Schnittstellenschaltkreis umfasst. Die einzelnen Schaltkreise sind auf einem einstückigen Mikrochip zusammengefasst. Die Lesespule 13 kommuniziert über ein Antennenkabel 23 mit dem Übertragungsmodul 17, wobei die Verbindungsleitung hier als Twisted-Pair-Leitung mit einer maximalen Länge von etwa 0,9 m ausgebildet ist. Alternativ kann das Übertragungsmodul 17 auch direkt an der Lesespule 13 angeordnet sein. Der Schnittstellenschaltkreis des Übertragungsmoduls 17 ist derart ausgebildet, dass er eine Datenübertragung auf der Grundlage eines seriellen Ein-Draht-Bussystems ermöglicht. Bei der hier beschriebenen Ausführungsform entspricht das Bussystem den Spezifikationen der sogenannten K-Leitung. Die seriellen Daten werden über ein Schnittstellenkabel 25 ausgegeben, das auf einer einzelnen Kupferdrahtleitung beruht und im Prinzip beliebig lang sein kann. Die für die jeweilige Anwendung vorzusehende Kabellänge richtet sich nach den Vorgaben durch die Elektronik-Architektur des Kraftfahrzeugs. Die Basisstation 19 der Wegfahrsperre ist wiederum mit dem Steuergerät 11 des Motors sowie weiteren elektronischen Steuereinheiten 20 des Kraftfahrzeugs verbunden, wobei zur Kommunikation ein CAN-Bussystem 27 verwendet wird. Die Basisstation 19 umfasst als wesentliche Komponente einen Mikrocontroller 41 und arbeitet auf rein digitaler Basis.

Durch das Zusammenfassen aller für den Lesespulenbetrieb notwendigen Komponenten auf einem einzelnen Mikrochip ist es möglich, unter Vermeidung erhöhter Kosten die Gestaltungsmöglichkeiten hinsichtlich des Einbaus einer Wegfahrsperre in ein Kraftfahrzeug wesentlich zu erhöhen. Insbesondere werden durch das Vorsehen einer platzsparenden Zwischenstation sowie einer zusätzlichen Kabelstrecke die Freiheitsgrade in Bezug auf die Unterbringung der Komponenten erweitert. Der Fahrzeughersteller kann beispielsweise dem Hersteller der Wegfahrsperre die relevanten Wunschparameter in Bezug auf die Elektronik-Architektur mitteilen, woraufhin die jeweiligen Kabellängen für die Leitung zwischen Lesespule 13 und Übertragungsmodul 17 sowie zwischen Übertragungsmodul 17 und Basisstation 19 passend gewählt werden. Im Anschluss wird ein aufgabenspezifischer Mikrochip gefertigt, welcher genau auf die Kundenvorgaben abgestimmt ist. Es ist nicht mehr erforderlich, direkt an der Lesespule 13 ausreichend Platz zum Einbau einer Schnittstelleneinheit vorzusehen.

### Bezugszeichenliste

- 11: Fahrzeug-Steuergerät
- 13: Antennenmodul, Lesespule
- 15: tragbare elektronische Freigabevorrichtung, Transponder
- 17: Übertragungsmodul
- 19: Sicherheitsmodul-Steuereinheit, Basisstation
- 20: Fahrzeug-Steuereinheiten
- 21: integrierter Schaltkreis
- 23: Antennenkabel
- 25: Schnittstellenkabel
- 27: CAN-Bus
- 31: interner Oszillator
- 33: Spannungsregler
- 35: Schnittstellenbaustein
- 37: Anregungs-/Lesebaustein
- 39: Mikrocontroller
- 41: Mikrocontroller

## Patentansprüche

1. Sicherheitsmodul für ein Kraftfahrzeug mit einer Antriebsvorrichtung und wenigstens einem Fahrzeug-Steuergerät (11) zum Steuern des Betriebs der Antriebsvorrichtung, wobei das Sicherheitsmodul umfasst:
ein Antennenmodul (13), das ausgebildet ist, um elektromagnetische Signale zu einer tragbaren elektronischen Freigabevorrichtung (15) zu senden und von dieser zu empfangen;
ein Übertragungsmodul (17), das mit dem Antennenmodul (13) in Verbindung steht und ausgebildet ist, um von diesem ein Eingangssignal zu empfangen und auf der Grundlage des Eingangssignals einen Sicherheitscode zu erzeugen; und
eine Sicherheitsmodul-Steuereinheit (19), die mit dem Übertragungsmodul (17) und dem Fahrzeug-Steuergerät (11) in Verbindung steht und ausgebildet ist, um den Sicherheitscode von dem Übertragungsmodul (17) zu empfangen, diesen zu validieren und in Abhängigkeit von dem Ergebnis der Validierung das Fahrzeug-Steuergerät (11) selektiv anzuweisen, den Betrieb der Antriebsvorrichtung zu blockieren oder freizugeben;
**dadurch gekennzeichnet, dass**
das Übertragungsmodul (17) einen integrierten Schaltkreis (21) aufweist, welcher umfasst:
einen Oszillatorschaltkreis zum Bereitstellen eines elektrischen Schwingungssignals;
einen Anregungs-/Leseschaltkreis zum Erzeugen eines zu sendenden Ausgangssignals und zum Auslesen von Daten aus dem empfangenen Eingangssignal;
einen Spannungsreglerschaltkreis zum Bereitstellen einer konstanten elektrischen Spannung; und
einen Schnittstellenschaltkreis zum Ermöglichen einer digitalen Datenübertragung.

2. Sicherheitsmodul nach Anspruch 1,
**dadurch gekennzeichnet, dass** der Oszillatorschaltkreis, der Anregungs-/Leseschaltkreis, der Spannungsreglerschaltkreis und der Schnittstellenschaltkreis auf einem einstückigen Trägerelement, insbesondere einem Mikrochip, zusammengefasst sind.

3. Sicherheitsmodul nach Anspruch 1 oder 2,
**dadurch gekennzeichnet, dass** der Schnittstellenschaltkreis eine Datenübertragung auf der Grundlage eines seriellen Ein-Draht-Bussystems, insbesondere einer K-Leitung, ermöglicht.

4. Sicherheitsmodul nach zumindest einem der vorstehenden Ansprüche,
**dadurch gekennzeichnet, dass**
das Übertragungsmodul (17) über ein Antennenkabel (23) von mindestens 0,3 m Länge mit dem Antennenmodul (13) in Verbindung steht.

5. Sicherheitsmodul nach zumindest einem der vorstehenden Ansprüche,
**dadurch gekennzeichnet, dass**
das Übertragungsmodul (17) über ein Schnittstellenkabel (25) von mehr als 1 m Länge mit der Sicherheitsmodul-Steuereinheit (19) in Verbindung steht.

6. Sicherheitsmodul nach zumindest einem der vorstehenden Ansprüche,
**dadurch gekennzeichnet, dass**
der Anregungs-/Leseschaltkreis eine applikationsspezifische integrierte Schaltung umfasst.

7. Sicherheitsmodul nach zumindest einem der vorstehenden Ansprüche,
**dadurch gekennzeichnet, dass**
der Oszillatorschaltkreis ein elektrisches Schwingungssignal mit einer Frequenz von etwa 125 kHz bereitstellt.

8. Sicherheitsmodul nach zumindest einem der vorstehenden Ansprüche,
**dadurch gekennzeichnet, dass**
die Sicherheitsmodul-Steuereinheit (19) über ein standardisiertes serielles Bussystem (27), insbesondere ein CAN-Bussystem, mit dem Fahrzeug-Steuergerät (11) kommuniziert.

9. Integrierter Schaltkreis, der zur Verwendung in einem Sicherheitsmodul nach einem der Ansprüche 1 bis 8 ausgebildet ist.
